# EUROPEAN PATENT SPECIFICATION

(11) **EP 4 249 360 B1**
(45) Date of publication and mention of the grant of the patent: **25.09.2024**
(21) Application number: 22183060.7
(22) Date of filing: 05.07.2022
(51) Int. Cl.: B62M 6/55

(54) **ELECTRIC ASSISTANT MOTOR MODULE AND REDUCING STRUCTURE**
ELEKTRISCHES HILFSMOTORMODUL UND REDUZIERSTRUKTUR
MODULE DE MOTEUR D'ASSISTANT ÉLECTRIQUE ET STRUCTURE DE RÉDUCTION

(30) Priority: 24.03.2022 TW 111111125
(43) Date of publication of application: 27.09.2023
(73) Proprietor: Tung Pei Industrial Co., Ltd., Tapei City 106 (TW)
(72) Inventor: YU, Wei-Kuei, 334 Taoyuan City (TW)
(74) Representative: Melchior, Robin

(56) References cited:
- WO-A2-2019/069084

## Description

### BACKGROUND

### Technical Field

The present invention relates generally to an electric assistant motor module and a reducing structure.

### Description of Related Art

Generally, the conventional electric bikes provide with an in-wheel motor at a position of a rear wheel of the conventional electric bikes, or provide with a mid-drive electric assistant motor at a bottom bracket shell of a frame of the conventional electric bikes. In this way, the in-wheel motor drives the rear wheel to rotate, or the mid-drive electric assistant motor drives a drivetrain of a chainring to provide an electric assisted power, allowing riders to ride electric bikes easier. For example, WO 2019/069084 A2 discloses a mid-drive electric assistant motor, wherein a harmonic drive is applied as a transmission and reduction way, and a harmonic flex-spline houses an outer race that is secured with bolts.

As the pedaling feeling of riders during riding is subjective and the center of gravity is configured more reasonably, the mid-drive electric assistant motor is more preferable than the in-wheel motor among bike consumers. Generally, the mid-drive electric assistant motor applies a parallel shaft gear assembly or a planetary gear assembly to transmit reduction. However, such structure has a heavy weight and a large volume, which is inconducive to reducing weight and volume when being applied to the weight-demanding bike field. Reducing weight and volume of the electric assistant motor is a problem needed to be solved in the industry.

### SUMMARY OF THE INVENTION

In view of the above, the primary objective of the present invention is to provide an electric assistant motor module, which could reduce a weight, an axial length, and a radial length thereof by applying a reducing structure of a cup-type harmonic drive to the electric assistant motor module, which has a plurality of screw threads between the transmission structures and transmits torque through a friction, enabling the miniaturization of the electric assistant motor module.

The present invention provides an electric assistant motor module, including a shell, a motor, a reducing structure, a mating part, a crank spindle, and a crankset. The motor is fixed in the shell and has a rotor. The reducing structure includes a wave generator, a circular spline, and a flex spline. The wave generator has an input end. The rotor transmits torque to the input end. The circular spline is fixed in the shell. The flex spline has a flexible wall, wherein an outer peripheral surface of the flexible wall has a teeth portion. The teeth portion meshes with the circular spline. The wave generator abuts against an inner side of the flexible wall. A front-end edge of the flexible wall is connected to a ring disk which extends inwards. An inner peripheral edge of the ring disk forms a connecting base, wherein the connecting base has a threaded section and a friction surface. The threaded section of the connecting base is located on an inner peripheral surface or an outer peripheral surface of the connecting base, and is connected to the friction surface of the connecting base.

The mating part is annular and is coaxial with the flex spline and has a fixing portion, wherein fixing portion has a threaded section and a friction surface. The friction surface of the fixing portion is connected to the threaded section of the fixing portion. The threaded section of the fixing portion is engaged with the threaded section of the connecting base, and the friction surface of the fixing portion abuts against the friction surface of the connecting base. The crank spindle penetrates through the shell, the mating part, the reducing structure, and the rotor in a coaxial and rotatable way, wherein two ends of the crank spindle respectively penetrate out of the shell and respectively have a connecting portion. The crankset fits around a periphery of the crank spindle in a coaxial and rotatable way. A first one-way ratchet structure is provided between the crankset and the mating part, and a second one-way ratchet structure is provided between the crankset and the crank spindle. The crankset has an engaging cylinder, wherein the engaging cylinder penetrates through the shell for being engaged with a chainring of a bike.

In practice, the present invention is installed on a bottom bracket shell of a bike. The crankset is engaged with a chainring of a chain drive system to drive the chainring. The two ends of the crank spindle are respectively engaged with a crank arm and a pedal. When the motor inside the shell is engaged with the mating part through the reducing structure, the threaded section of the fixing portion of the mating part is engaged with the threaded section of the connecting base of the flex spline, and a fiction between the friction surface of the connecting base and the friction surface of the fixing portion allows the flex spline to transmit torque to the mating part. In this way, the mating part driven by the motor and the crank spindle rotated by pedaling could drive the crankset and the chainring on the crankset to turn via the first one-way ratchet structure and the second one-way ratchet structure respectively, thereby the bike driven by manual pedaling could obtain an electric assisted power.

With the aforementioned design, the radial length, the volume, and the weight of the electric assistant motor module could be reduced by applying the cup-type harmonic drive in the electric assistant motor module as the reducing structure. When the mating part is engaged with the flex spline of the reducing structure, the threaded section of the fixing portion is engaged with the threaded section of the connecting base. As the engagement between the mating part and the flex spline does not require an additional fixing member, a weight of the fixing member could be avoided, widening an inner diameter of the connecting base and reducing a radial thickness of one side of the connecting base, whereby the weight and the radial length of the electric assistant motor module could be reduced. Besides, as the motor, the reducing structure, the mating part, the crank spindle, and the crankset are coaxial, the present invention is suitable for being installed in a bottom bracket shell of a bike which has a limited horizontal width and a limited room for installation. As a result, a length of an outer diameter and a strength of materials of the crank spindle could be retained, and at the same time the weight of the bike could be reduced.

### BRIEF DESCRIPTION OF THE DRAWINGS

The present invention will be best understood by referring to the following detailed description of some illustrative embodiments in conjunction with the accompanying drawings, in which
FIG. 1 is a perspective view of the electric assistant motor module according to a first embodiment of the present invention;
FIG. 2 is a front view of the electric assistant motor module according to the first embodiment of the present invention;
FIG. 3 is a sectional view along the 3-3 line in FIG. 2;
FIG. 4 is an enlarged view of a marked region E in FIG. 3;
FIG. 5 is an exploded view of the motor, the reducing structure, the mating part, the crank spindle, and the crankset according to the first embodiment of the present invention;
FIG. 6 is an exploded view of FIG. 5 seen from another direction;
FIG. 7 is a sectional view of the flex spline in FIG. 3;
FIG. 8 is a perspective view of the electric assistant motor module according to a second embodiment of the present invention;
FIG. 9 is a sectional view along the 9-9 line in FIG. 8;
FIG. 10 is an exploded view of the flex spline and the mating part according to the second embodiment of the present invention; and
FIG. 11 is an exploded view of FIG. 10 seen from another direction.

### DETAILED DESCRIPTION OF THE INVENTION

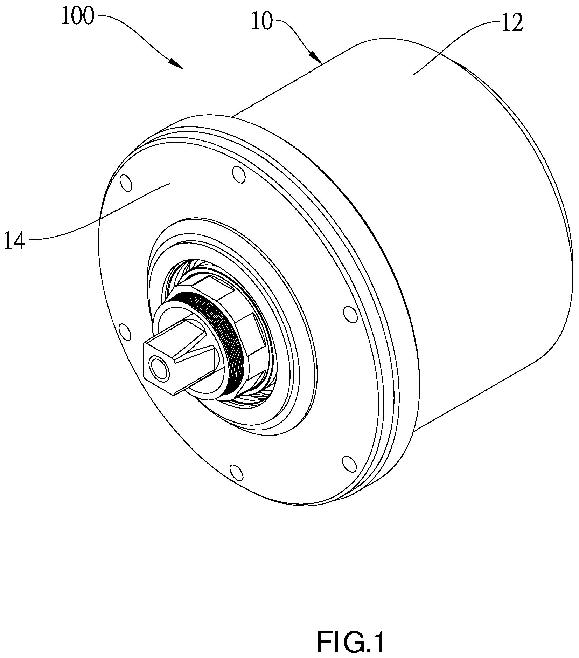

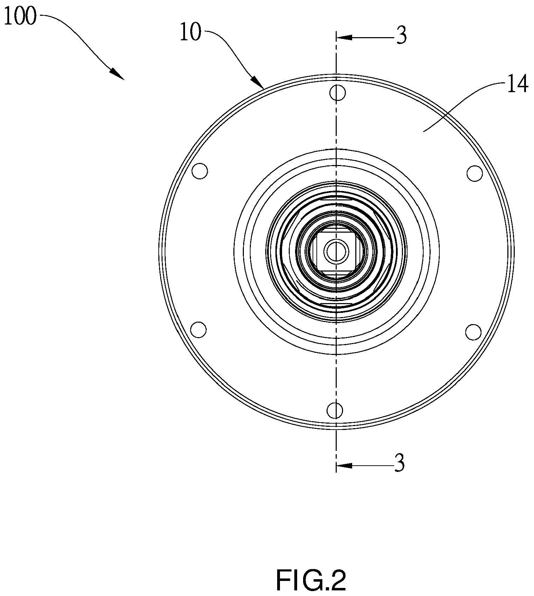

An electric assistant motor module 100 according to a first embodiment of the present invention is illustrated in FIG. 1 to FIG. 4 and includes a shell 10, a motor 20, a reducing structure 30, a mating part 40, a crank spindle 50, and a crankset 60, which are respectively installed in the shell 10.

The shell 10 includes a bottom shell 12 and a cover 14. The bottom shell 12 is a cylinder which is provided horizontally. A side of the bottom shell 12 has a bottom portion 121, and another side of the bottom shell 12 opposite to the bottom portion 121 forms an opening 123, wherein a receiving space 122 is formed in the bottom shell 12. A center of the bottom portion 121 of the bottom shell 12 has an axial hole 124, wherein a bearing 125 fits in the axial hole 124. The cover 14 is engaged with the side of the bottom shell 12 which the opening 123 is provided and seals the opening 123. A center of the cover 14 has an axial hole 141, wherein an outer bearing 142 fits in the axial hole 141 of the cover 14.

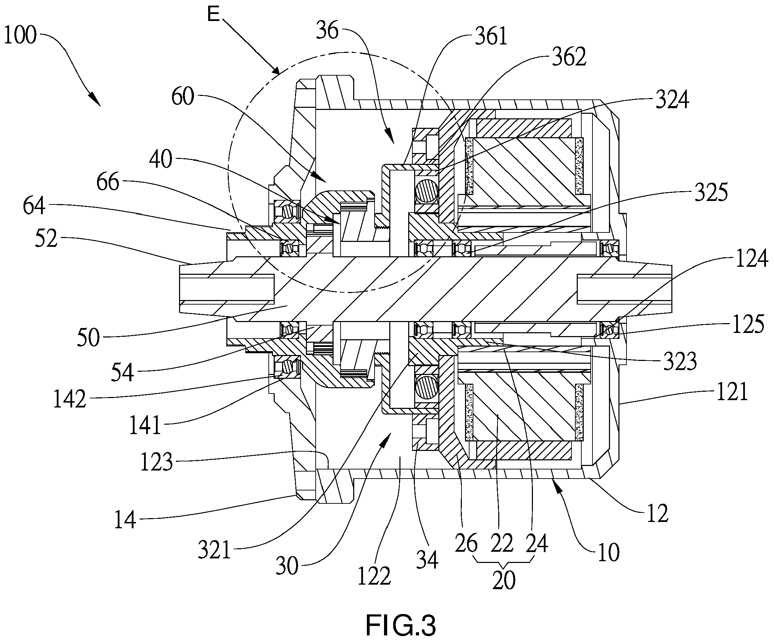

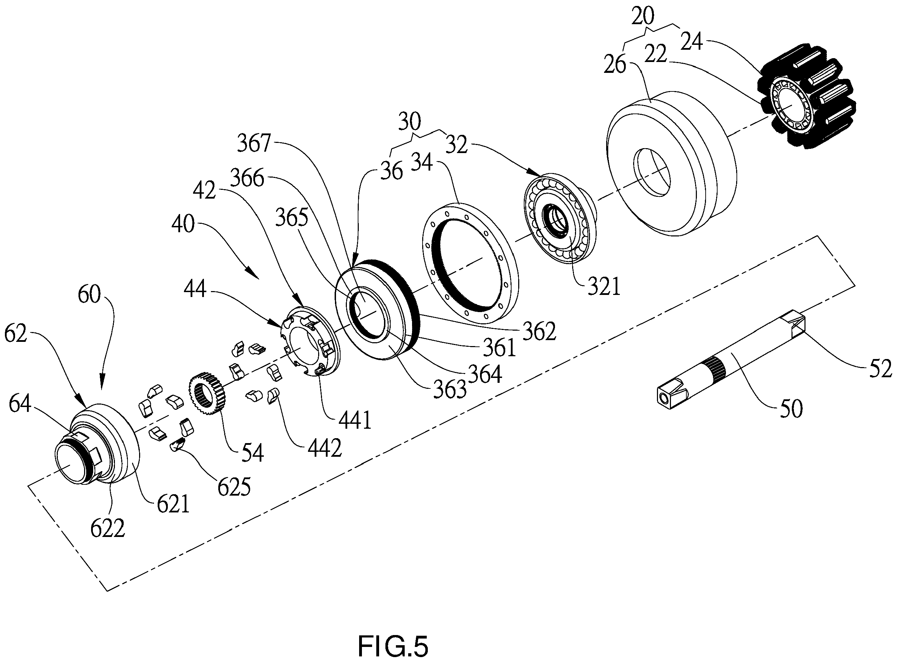

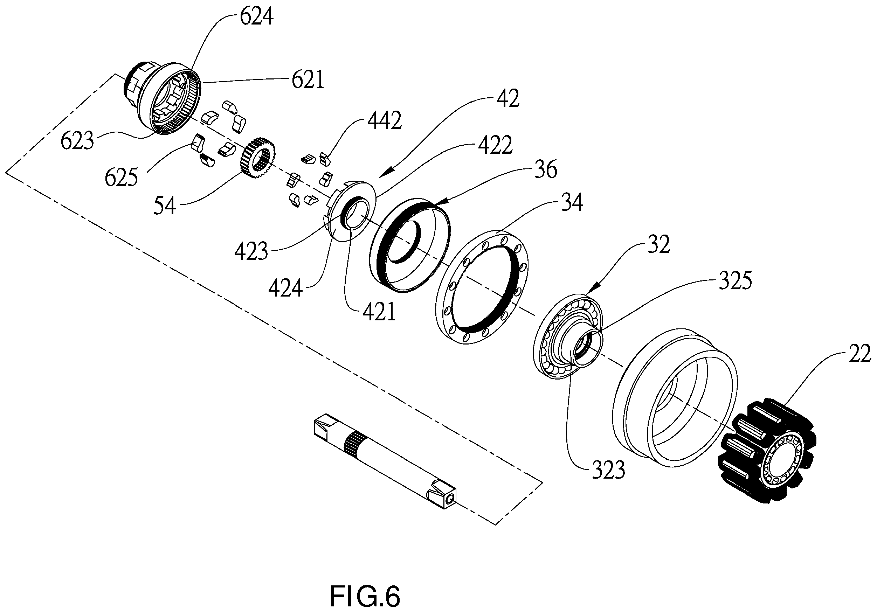

As shown in FIG. 3 to FIG. 6, the motor 20 is a frameless motor and includes a stator 22, a rotor 24, and a motor shell 26, wherein the stator 22 is engaged with the motor shell 26. The motor shell 26 is provided in the bottom shell 12 and is fixed on a side of the receiving space 122 near the bottom portion 121. The rotor 24 is annular and is located on an inner side of the stator 22 (i.e., the rotor 24 is closer to the crank spindle 50 than the stator 22). The bearing 125 of the bottom shell 12, the outer bearing 142 of the cover 14, and the rotor 24 are provided coaxially along an axial direction of the motor 20.

The reducing structure 30 includes a wave generator 32, a circular spline 34, and a flex spline 36. The wave generator 32 has a hollow shaft 321, wherein the hollow shaft 321 is tubular. An elliptical hub 322 is formed around an end of the hollow shaft 321, and another end of the hollow shaft 321 forms an input end 323, wherein the input end 323 is engaged with the rotor 24 of the motor 20 to be driven by the rotor 24. An outer peripheral surface of the elliptical hub 322 is slightly elliptical, and a ball bearing 324 which is flexible and deformable along a radial direction of the elliptical hub 322 fits around a periphery of the elliptical hub 322. A middle bearing 325 fits in an inner peripheral surface of the hollow shaft 321. In other embodiments, the hollow shaft 321 and the rotor 24 of the motor 20 could be integrally formed as a monolithic unit, wherein at this time, the hollow shaft 321 could coaxially turn along with the rotor 24 even the middle bearing 325 of the wave generator 32 is not provided in the inner peripheral surface of the hollow shaft 321. The circular spline 34 and the rotor 24 are coaxial, and the circular spline 34 is engaged with a side of the motor shell 26 facing the cover 14, thereby to fix the circular spline 34 in the shell 10. In other embodiments, the circular spline 34 could be fixed in the shell 10 through an additional support or by directly contacting an inner wall of the shell 10.

The flex spline 36 is a cup shape and has a flexible wall 361, wherein the flexible wall 361 is an annular thin wall and is coaxial with the circular spline 34. Upon experiencing a force along a radial direction of the flexible wall 361, the flexible wall 361 deforms along the radial direction of the flexible wall 361. A side of the flexible wall 361 facing the cover 14 along an axial direction of the flex spline 36 and another side opposite to the cover 14 are defined as a front side and a rear side. A teeth portion 362 is disposed around an outer peripheral surface of the flexible wall 361. The ball bearing 324 of the wave generator 32 matches with the circular spline 34 to abut against an inner peripheral surface of the flexible wall 361, so that a portion of the teeth portion 362 abutted and pushed by the ball bearing 324 meshes with the circular spline 34.

A front-end edge of the flexible wall 361 is connected to a ring disk 363, wherein the flexible wall 361 extends inwards (i.e., towards an axis of the flex spline 36) to form the ring disk 363. An inner peripheral edge of the ring disk 363 forms a connecting base 364, wherein the connecting base 364 protrudes frontwards along the axial direction relative to the ring disk 363. The connecting base 364 has a threaded section 365 and a friction surface 366. The threaded section 365 of the connecting base 364 is located on an inner peripheral surface of the connecting base 364, and is connected to the friction surface 366 of the connecting base 364. An angle, which is greater than 0 degrees and smaller than 180 degrees, is formed between the friction surface 366 of the connecting base 364 and the inner peripheral surface of the connecting base 364. In the current embodiment, the friction surface 366 of the connecting base 364 is formed on a front-end surface of the connecting base 364 in the axial direction of the flex spline 36, and the friction surface 366 of the connecting base 364 is perpendicular to the inner peripheral surface of the connecting base 364. An inner side of the connecting base 364 has a through hole 367 communicating with a room inside the flexible wall 361.

The mating part 40 is annular and is coaxial with the flex spline 36, and has a fixing portion 42 and a driving portion 44 which are connected together. The fixing portion 42 includes an annular body 421 and a protruding ring 422 connected to the annular body 421, wherein an outer diameter of the protruding ring 422 is greater than an outer diameter of the annular body 421. An outer peripheral surface of the annular body 421 has a threaded section 423 connected to the protruding ring 422, and a friction surface 424 is formed on a side surface of the protruding ring 422 facing the connecting base 364. The friction surface 424 of the protruding ring 422 is connected to the threaded section 423 of the annular body 421. A periphery of the driving portion 44 has a plurality of first ratchet grooves 441, wherein each of the first ratchet grooves 441 provides with a first ratchet block 442 which could restore an original position after moving. When the mating part 40 is engaged with the reducing structure 30, the threaded section 423 of the annular body 421 is engaged with the threaded section 365 of the connecting base 364, and the friction surface 424 of the protruding ring 422 abuts against the friction surface 366 of the connecting base 364. In this way, after an output of the motor 20 is reduced by the reducing structure 30, a friction between the friction surface 366 of the flex spline 36 and the friction surface 424 of the fixing portion 42 allows the flex spline 36 to transmit torque to the mating part 40.

The crank spindle 50 is a spindle extending along an axial direction of the shell 10 and penetrates through the bearing 125 of the shell 10 and the middle bearing 325 on an inner side of the wave generator32, so that the crank spindle 50 penetrates through and is pivotally connected to the shell 10, the reducing structure 30, the mating part 40, and the rotor 24 of the motor 20 in a coaxial and rotatable way. Two opposite ends of the crank spindle 50 respectively penetrate through the axial hole 124 of the bottom shell 12 and the axial hole 141 of the cover 14, and respectively form a connecting portion 52, wherein the connecting portion 52 could be a non-circular head having a screw hole on an outer-end surface thereof, such as a square head, a hexalobular head, or a head structure surrounded by splines.

The crankset 60 is tubular and has a driving body 62 and an engaging cylinder 64 which are connected together. The crankset 60 passes through the outer bearing 142 of the cover 14 and fits around a periphery of the crank spindle 50 in a coaxial and rotatable way. An inner bearing 66 is provided between the engaging cylinder 64 and the crank spindle 50. The driving body 62 is divided into a first portion 621 and a second portion 622 along an axial direction of the driving body 62. The driving portion 44 of the mating part 40 is disposed in the first portion 621, so that the first portion 621 surrounds the periphery of the driving portion 44. An inner peripheral surface of the first portion 621 forms a first one-way ratchet teeth 623, wherein the first one-way ratchet teeth 623 matches with the first ratchet block 442 to form a first one-way ratchet structure A. A gear 54 fits around and is fixed on a portion of the crank spindle 50 located on an inner side of the second portion 622. In the current embodiment, the gear 54 and the crank spindle 50 are fixed via a spline structure. An inner peripheral surface of the second portion 622 has a plurality of the second ratchet grooves 624, wherein each of the second ratchet grooves 624 provides with a second ratchet block 625 which could restore an original position after moving. The gear 54 matches with the second ratchet block 625 to form a second one-way ratchet structure B. A portion of the engaging cylinder 64 penetrating out of the cover 14 is adapted to be engaged with a chainring of a bike.

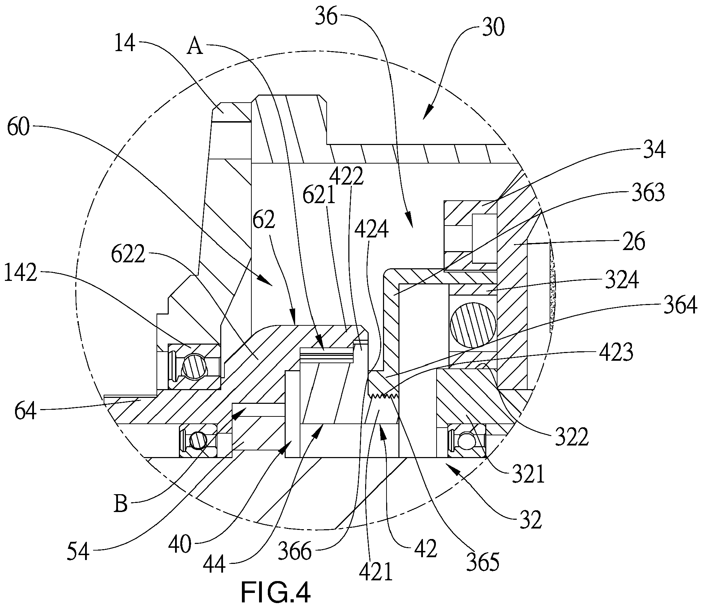

Referring to FIG. 3 and FIG. 4, when using the present invention, the shell 10 is installed in a bottom bracket shell of the bike, wherein the connection portion 52 of each of the two ends of the crank spindle 50 is engaged with a crank arm and a pedal of the bike, and the chainring of the bike is engaged with the engaging cylinder 64 of the crankset 60. The two crank arms drive the crank spindle 50 to spin when the two pedals are pedaled, and the crankset 60 and the chainring engaged with the crankset 60 are then driven to turn via the first one-way ratchet structure A, so that a chain drive system of the bike could be driven manually. When a power of the bike requires to be assisted by an electric power, the motor 20 is reduced by the reducing structure 30, and then the flex spline 36 drives the mating part 40 engaged with the flex spline 36 to turn, and the crankset 60 and the chainring engaged with the crankset 60 are then driven to turn via the second one-way ratchet structure B, so that the chain drive system of the bike could be driven by the electric power.

With the aforementioned design, when the mating part 40 is engaged with the flex spline 36 of the reducing structure 30 via the fixing portion 42, the threaded section 423 of the fixing portion 42 is engaged with the threaded section 365 of the flex spline 36, and a friction between the friction surface 366 of the flex spline 36 and the friction surface 424 of the fixing portion 42 allows the flex spline 36 of the reducing structure 30 to transmit torque to the mating part 40. The electric assistant motor module 100 applies a cup-type harmonic drive as the reducing structure 30 which is conducive to reducing a radial length, a volume, and a weight. As the engagement between the mating part 40 and the flex spline 30 does not require an additional fixing member such as a bolt and nut assembly, an overall weight of the present invention could be reduced.

Additionally, as the connecting base 364 does not have to provide a hole for arranging fixing members since the fixing members are omitted, thereby widening an inner diameter of the connecting base364 and reducing a weight of the reducing structure 30. As the motor 20, the reducing structure 30, the mating part 40, the crank spindle 50, and the crankset 60 are coaxial, a width of the present invention could fit in a limited room of the bottom bracket shell, so that the present invention is suitable for being installed in the bottom bracket shell of an electric bike. The through hole 367 which is widened could also provide a sufficient room for electric wires or signal wires to pass through.

It is worth mentioning that a torque of the conventional electric bikes ranges between 30 Nm and 95 Nm, while the meshing structure of the threaded section 365 of the connecting base 364 and the threaded section 423 of the fixing portion 42 of the present invention could withstand a torque between 40 Nm and 120 Nm. Therefore, when the present invention is applied to a transmission with the torque less than or equal to 120 Nm, the engaging structure could not be broken easily by a force, and could benefit from the advantage of reducing weight and volume.

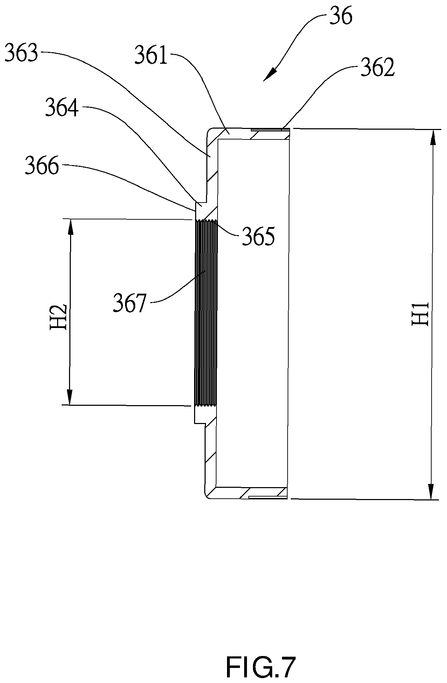

As shown in FIG. 7, in the current embodiment, a ratio of an inner diameter H2 of the connecting base 364 of the flex spline 36 to an outer diameter H1 of the connecting base 364 is greater than or equal to 0.6, such as 0.7 or 0.8, and a difference between the outer diameter H1 and inner diameter H2 is in a range of 2 mm to 26 mm. When the difference between the outer diameter H1 and inner diameter H2 is 2 mm, a radial thickness of one side of the connecting base 364 could be minimized to 1 mm. As a result, the through hole 367 of the inner side of the connecting base 364 could provide a sufficient room for wires to pass through. In other embodiments, the ratio of the inner diameter H2 of the connecting base 364 to the outer diameter H1 of the connecting base 364 could range between 0.5 and 0.6 and be greater than 0.5, such as greater than 0.55.

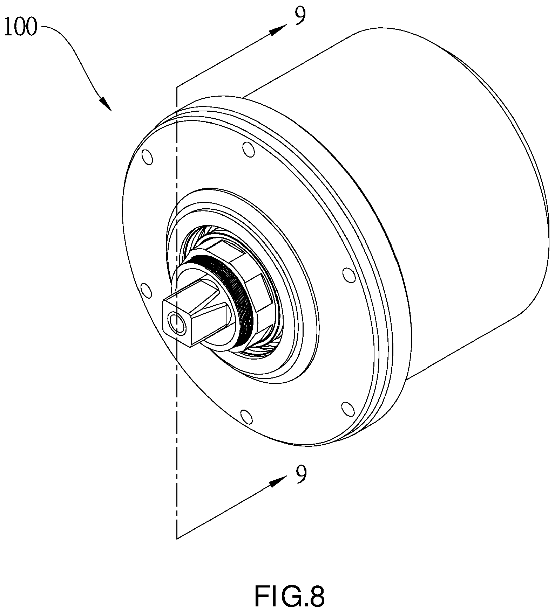

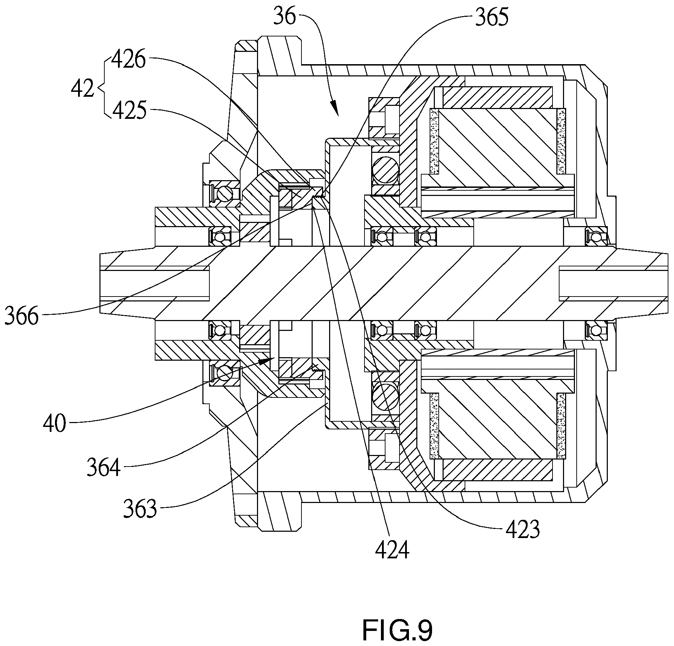

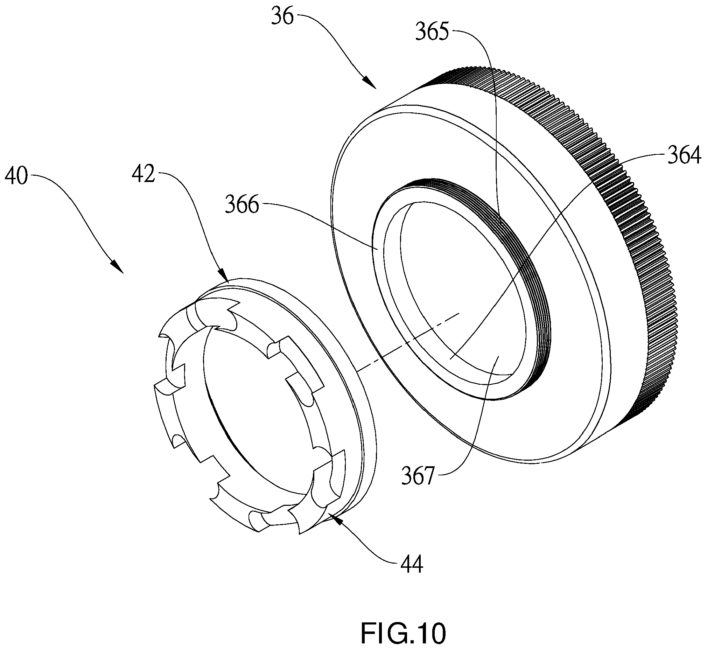

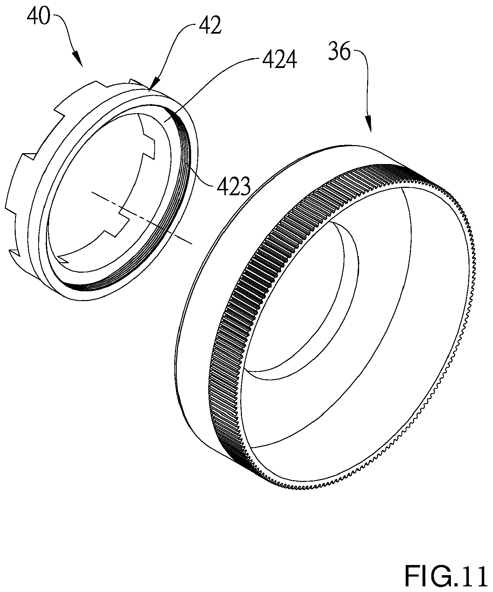

Apart from the first embodiment of the present invention, in which the threaded section 365 of the connecting bas 364 is formed on the inner peripheral surface of the connecting base 364 and is engaged with the threaded section 423 of the mating part 40, an electric assistant motor module 100 according to a second embodiment of the present invention is illustrated in FIG. 8 to FIG. 11, wherein the threaded section 365 is provided on an outer peripheral surface of the connecting base 364 for being engaged with the mating part 40.

The connecting base 364 of the electric assistant motor module 100 according to the second embodiment protrudes frontwards along the axial direction relative to the ring disk 363, and also has the threaded section 365 and a friction surface 366. The threaded section 365 of the connecting base 364 is located on the outer peripheral surface of the connecting base 364, and the friction surface 366 of the connecting base 364 is connected to the threaded section 365 of the connecting base 364. An angle, which is greater than 0 degree and smaller than 180 degrees, is formed between the friction surface 366 of the connecting base 364 and the threaded section 365 of the connecting base 364. In the current embodiment, the friction surface 366 of the connecting base 364 is formed on a front-end surface of the connecting base 364, and the friction surface 366 of the connecting base 364 is perpendicular to the outer peripheral surface of the connecting base 364. An inner side of the connecting base 364 has a through hole 367 communicating with a room inside the flexible wall 361.

Matching with the structure of the flex spline 36, the fixing portion 42 of the mating part 40 which is connected to the driving portion 44 includes a bottom ring 425 and an outer ring 426 which extends outwards along the axial direction from a periphery edge of an outer-end surface of the bottom ring 425. An inner peripheral surface of the outer ring 426 has a threaded section 423. A friction surface 424 is provided on an end surface of the bottom ring 425 facing the connecting base 364. The friction surface 424 of the bottom ring 425 is connected to the threaded section 423 of the outer ring 426. When the mating part 40 is engaged with the flex spline 36 of the reducing structure 30 via the fixing portion 42, The threaded section 423 of the outer ring 426 is engaged with threaded section 365 of the connecting base 364, and the friction surface 424 of the bottom ring 425 abuts against the friction surface 366 of the connecting base 364, so that the reducing structure 30 could transmit torque to the mating part 40 through a friction between the friction surface 366 of the connecting base 364 and the friction surface 424 of the bottom ring 425.

The structure of the electric assistant motor module 100 according to the second embodiment is the same as that of the first embodiment, except the flex spline 36 and the fixing portion 42. The way of using the electric assistant motor module 100 according to the second embodiment is also the same as that of the first embodiment. In the same way, the engagement between the reducing structure 30 which is a cup-type and the mating part 40 does not require an additional fixing member such as a bolt and nut assembly, an axial length, a radial length, and a weight could be reduced, and an inner diameter of the connecting base 364 could be widened, so that the present invention has a light weight and a small volume and is suitable for being installed in a bottom bracket shell of a bike.

## Claims

1. An electric assistant motor module for a bicycle (100), comprising:
a shell (10);
a motor (20) fixed in the shell (10) and having a rotor (24);
a reducing structure (30) comprising a wave generator (32), a circular spline (34), and a flex spline (36), wherein the wave generator (32) has an input end (323); the rotor (24) transmits torque to the input end (323); the circular spline (34) is fixed in the shell (10); the flex spline (36) has a flexible wall (361), wherein an outer peripheral surface of the flexible wall (361) has a teeth portion (362); the teeth portion (362) meshes with the circular spline (34); the wave generator (32) abuts against an inner side of the flexible wall (361); a front-end edge of the flexible wall (361) is connected to a ring disk (363) which extends inwards; an inner peripheral edge of the ring disk (363) forms a connecting base (364), wherein the connecting base (364) has a threaded section (365) and a friction surface (366); the threaded section (365) of the connecting base (364) is located on an inner peripheral surface or an outer peripheral surface of the connecting base (364) and is connected to the friction surface (366) of the connecting base (364);
a mating part (40) which is annular and is coaxial with the flex spline (36) and has a fixing portion (42), wherein the fixing portion (42) has a threaded section (423) and a friction surface (424); the friction surface (424) of the fixing portion (42) is connected to the threaded section (423) of the fixing portion (42); the threaded section (423) of the fixing portion (42) is engaged with the threaded section (365) of the connecting base (364), and the friction surface (424) of the fixing portion (42) abuts against the friction surface (366) of the connecting base (364);
a crank spindle (50) penetrating through the shell (10), the mating part (40), the reducing structure (30), and the rotor (24) in a coaxial and rotatable way, wherein two ends of the crank spindle (50) respectively penetrate out of the shell (10) and respectively have a connecting portion (52); and
a crankset (60) fitting around a periphery of the crank spindle (50) in a coaxial and rotatable way, wherein a first one-way ratchet structure (A) is provided between the crankset (60) and the mating part (40), and a second one-way ratchet structure (B) is provided between the crankset (60) and the crank spindle (50); the crankset (60) has an engaging cylinder (64), wherein the engaging cylinder (64) penetrates through the shell (10) for being engaged with a chainring of a bike.

2. The electric assistant motor module (100) as claimed in claim 1, wherein the threaded section (365) of the connecting base (364) is formed on the inner peripheral surface of the connecting base (364), and the friction surface (366) of the connecting base (364) is formed on a front-end surface of the connecting base (364) facing the mating part (40); the mating part (40) has a driving portion (44) connected to the fixing portion (42); the crankset (60) has a driving body (62) connected to the engaging cylinder (64), wherein the driving body (62) is divided into a first portion (621) and a second portion (622) along an axial direction of the driving body (62); the first one-way ratchet structure (A) is provided between the driving portion (44) of the mating part (40) and the first portion (621) of the crankset (60), and the second one-way ratchet structure (B) is provided between the crank spindle (50) and the second portion (622) of the crankset (60) .

3. The electric assistant motor module (100) as claimed in claim 1, wherein the connecting base (364) protrudes frontwards from the ring disk (363) along an axial direction of the ring disk (363); the threaded section (365) of the connecting base (364) is formed on the outer peripheral surface of the connecting base (364), and the friction surface (366) of the connecting base (364) is formed on a front-end surface of the connecting base (364) facing the mating part (40); the mating part (40) has a driving portion (44) connected to the fixing portion (42); the crankset (60) has a driving body (62) connected to the engaging cylinder (64), wherein the driving body (62) is divided into a first portion (621) and a second portion (622) along an axial direction of the driving body (62); the first one-way ratchet structure (A) is provided between the driving portion (44) of the mating part (40) and the first portion (621) of the crankset (60), and the second one-way ratchet structure (B) is provided between the crank spindle (50) and the second portion (622) of the crankset (60) .

4. The electric assistant motor module (100) as claimed in claim 1 to claim 3, wherein a ratio of an inner diameter of the connecting base (364) to an outer diameter of the connecting base (364) is greater than 0.5.

5. The electric assistant motor module (100) as claimed in claim 1 to claim 3, wherein an inner side of the connecting base (364) has a through hole (367); a difference between an inner diameter of the connecting base (364) and an outer diameter of the connecting base (364) is in a range of 2 mm to 26 mm.

6. A reducing structure for a bicycle (30), comprising:
a flex spline (36) having a flexible wall (361), wherein an outer peripheral surface of the flexible wall (361) has a teeth portion (362); a front-end edge of the flexible wall (361) is connected to a ring disk (363) which extends inwards; an inner peripheral edge of the ring disk (363) forms a connecting base (364), wherein the connecting base (364) has a threaded section (365) and a friction surface (366); the threaded section (365) of the connecting base (364) is located on an inner peripheral surface or an outer peripheral surface of the connecting base (364) and is connected to the friction surface (366) of the connecting base (364); an angle is formed between the friction surface (366) of the connecting base (364) and the threaded section (365) of the connecting base (364), allowing the friction surface (366) of the connecting base (364) to be adapted to be abutted to generate a friction for transmission;
a circular spline (34) meshing with the teeth portion (362) of the flex spline (36); and
a wave generator (32) matching with the circular spline (34) to abut against an inner surface of the flexible wall (361), and having an input end (323).

7. The reducing structure (30) as claimed in claim 6, wherein the threaded section (365) of the connecting base (364) is formed on the inner peripheral surface of the connecting base (364); the friction surface (366) of the connecting base (364) is formed on a front-end surface of the connecting base (364) being away from the ring disk (363).

8. The reducing structure (30) as claimed in claim 6, wherein the connecting base (364) protrudes frontwards from the ring disk (363) along an axial direction of the ring disk (363); the threaded section (365) of the connecting base (364) is formed on the outer peripheral surface of the connecting base (364), and the friction surface (366) of the connecting base (364) is formed on a front-end surface of the connecting base (364) being away from the ring disk (363).

9. The reducing structure (30) as claimed in claim 6 to claim 8, wherein an inner side of the connecting base (364) has a through hole (367); a difference between an inner diameter of the connecting base (364) and an outer diameter of the connecting base (364) is in a range of 2 mm to 26 mm.

## Patentansprüche

1. Elektrisches Hilfsmotormodul für ein Fahrrad (100), aufweisend:
ein Gehäuse (10);
einen Motor (20), der im Gehäuse (10) befestigt ist und einen Rotor (24) aufweist;
eine Reduzierstruktur (30), die einen Wellengenerator (Wave Generator) (32), ein kreisförmiges Keilwellenprofil (Circular Spline) (34) und ein flexibles Keilwellenprofil (Flex Spline) (36) aufweist, wobei der Wellengenerator (32) ein Eingangsende (323) aufweist; der Rotor (24) ein Drehmoment auf das Eingangsende (323) überträgt; das kreisförmige Keilwellenprofil (34) im Gehäuse (10) befestigt ist; das flexible Keilwellenprofil (36) eine flexible Wand (361) aufweist, wobei eine Außenumfangsfläche der flexiblen Wand (361) einen Verzahnungsabschnitt (362) aufweist; der Verzahnungsabschnitt (362) mit dem kreisförmigen Keilwellenprofil (34) in Verzahnungseingriff steht; der Wellengenerator (32) gegen eine Innenseite der flexiblen Wand (361) ansteht; eine Stirnkante der flexiblen Wand (361) mit einer sich nach innen erstreckenden Ringscheibe (363) verbunden ist; eine Innenumfangskante der Ringscheibe (363) eine Verbindungsbasis (364) bildet, wobei die Verbindungsbasis (364) einen Gewindeabschnitt (365) und eine Reibungsfläche (366) aufweist; der Gewindeabschnitt (365) der Verbindungsbasis (364) sich auf einer Innenumfangsfläche oder einer Außenumfangsfläche der Verbindungsbasis (364) befindet und mit der Reibungsfläche (366) der Verbindungsbasis (364) verbunden ist;
ein Gegenstück (40), das ringförmig ist und das koaxial zu dem flexiblen Keilwellenprofil (36) ist und das einen Befestigungsabschnitt (42) aufweist, wobei der Befestigungsabschnitt (42) einen Gewindeabschnitt (423) und eine Reibungsfläche (424) aufweist; die Reibungsfläche (424) des Befestigungsabschnitts (42) mit dem Gewindeabschnitt (423) des Befestigungsabschnitts (42) verbunden ist; der Gewindeabschnitt (423) des Befestigungsabschnitts (42) mit dem Gewindeabschnitt (365) der Verbindungsbasis (364) in Eingriff ist, und die Reibungsfläche (424) des Befestigungsabschnitts (42) gegen die Reibungsfläche (366) der Verbindungsbasis (364) ansteht;
eine Kurbelspindel (50), die sich durch das Gehäuse (10), das Gegenstück (40), die Reduzierstruktur (30), und den Rotor (24) in einer koaxialen und drehbaren Weise erstreckt, wobei die zwei Enden der Kurbelspindel (50) jeweils aus dem Gehäuse (10) herausstehen und jeweils einen Verbindungsabschnitt (52) aufweisen; und
einen Kurbelsatz (60), der um einen Umfang der Kurbelspindel (50) in einer koaxialen und drehbaren Weise angebracht ist, wobei eine erste Einweg-Sperrklinkenstruktur (A) zwischen dem Kurbelsatz (60) und dem Gegenstückteil (40) vorgesehen ist, und eine zweite Einweg-Sperrklinkenstruktur (B) zwischen dem Kurbelsatz (60) und der Kurbelspindel (50) vorgesehen ist; der Kurbelsatz (60) einen Eingreifzylinder (64) aufweist, wobei sich der Eingreifzylinder (64) durch das Gehäuse (10) hindurch erstreckt, um sich mit einem Kettenring eines Fahrrads in Eingriff zu befinden.

2. Elektrisches Hilfsmotormodul (100) nach Anspruch 1, wobei der Gewindeabschnitt (365) der Verbindungsbasis (364) auf der Innenumfangsfläche der Verbindungsbasis (364) ausgebildet ist, und die Reibungsfläche (366) der Verbindungsbasis (364) auf einer dem Gegenstück (40) zugewandten Stirnfläche der Verbindungsbasis (364) ausgebildet ist; das Gegenstück (40) einen Antriebsabschnitt (44) aufweist, der mit dem Befestigungsabschnitt (42) verbunden ist; der Kurbelsatz (60) einen Antriebskörper (62) aufweist, der mit dem Eingreifzylinder (64) verbunden ist, wobei der Antriebskörper (62) in einen ersten Abschnitt (621) und einen zweiten Abschnitt (622) entlang einer Axialrichtung des Antriebskörpers (62) unterteilt ist; die erste Einweg-Sperrklinkenstruktur (A) zwischen dem Antriebsabschnitt (44) des Gegenstücks (40) und dem ersten Abschnitt (621) des Kurbelsatzes (60) vorgesehen ist, und die zweite Einweg-Sperrklinkenstruktur (B) zwischen der Kurbelspindel (50) und dem zweiten Abschnitt (622) des Kurbelsatzes (60) vorgesehen ist.

3. Elektrisches Hilfsmotormodul (100) nach Anspruch 1, wobei die Verbindungsbasis (364) nach vorne aus der Ringscheibe (363) entlang einer Axialrichtung der Ringscheibe (363) vorsteht; der Gewindeabschnitt (365) der Verbindungsbasis (364) auf der Außenumfangsfläche der Verbindungsbasis (364) ausgebildet ist, und die Reibungsfläche (366) der Verbindungsbasis (364) auf einer dem Gegenstück (40) zugewandten Stirnfläche der Verbindungsbasis (364) ausgebildet ist; das Gegenstück (40) einen Antriebsabschnitt (44) aufweist, der mit dem Befestigungsabschnitt (42) verbunden ist; der Kurbelsatz (60) einen Antriebskörper (62) aufweist, der mit dem Eingreifzylinder (64) verbunden ist, wobei der Antriebskörper (62) in einen ersten Abschnitt (621) und einen zweiten Abschnitt (622) entlang einer Axialrichtung des Antriebskörpers (62) unterteilt ist; die erste Einweg-Sperrklinkenstruktur (A) zwischen dem Antriebsabschnitt (44) des Gegenstücks (40) und dem ersten Abschnitt (621) des Kurbelsatzes (60) vorgesehen ist, und die zweite Einweg-Sperrklinkenstruktur (B) zwischen der Kurbelspindel (50) und dem zweiten Abschnitt (622) des Kurbelsatzes (60) vorgesehen ist.

4. Elektrisches Hilfsmotormodul (100) nach einem der Ansprüche 1 bis 3, wobei ein Verhältnis eines Innendurchmessers der Verbindungsbasis (364) zu einem Außendurchmesser der Verbindungsbasis (364) größer als 0,5 ist.

5. Elektrisches Hilfsmotormodul (100) nach einem der Ansprüche 1 bis 3, wobei eine Innenseite der Verbindungsbasis (364) ein Durchgangsloch (367) aufweist; eine Differenz zwischen einem Innendurchmesser der Verbindungsbasis (364) und einem Außendurchmesser der Verbindungsbasis (364) im Bereich von 2 mm bis 26 mm liegt.

6. Reduzierstruktur für ein Fahrrad (30), aufweisend:
ein flexibles Keilwellenprofil (36), das eine flexible Wand (361) aufweist, wobei eine Außenumfangsfläche der flexiblen Wand (361) einen Verzahnungsabschnitt (362) aufweist; eine Stirnkante der flexiblen Wand (361) mit einer sich nach innen erstreckenden Ringscheibe (363) verbunden ist; eine Innenumfangskante der Ringscheibe (363) eine Verbindungsbasis (364) bildet, wobei die Verbindungsbasis (364) einen Gewindeabschnitt (365) und eine Reibungsfläche (366) aufweist; der Gewindeabschnitt (365) der Verbindungsbasis (364) sich auf einer Innenumfangsfläche oder einer Außenumfangsfläche der Verbindungsbasis (364) befindet und mit der Reibungsfläche (366) der Verbindungsbasis (364) verbunden ist; ein Winkel zwischen der Reibungsfläche (366) der Verbindungsbasis (364) und dem Gewindeabschnitt (365) der Verbindungsbasis (364) ausgebildet ist, was ermöglicht, dass die Reibungsfläche (366) der Verbindungsbasis (364) so ausgebildet ist, dass sie in Anlage gebracht wird, um eine Reibung für eine Übertragung zu erzeugen;
ein kreisförmiges Keilwellenprofil (34), das mit dem Verzahnungsabschnitt (362) des flexiblen Keilwellenprofils (36) in Verzahnungseingriff ist; und
einen Wellengenerator (32), der ein Gegenstück zu dem kreisförmigen Keilwellenprofil (34) bildet, um gegen eine Innenfläche der flexiblen Wand (361) anzustehen, und ein Eingangsende (323) aufweist.

7. Reduzierstruktur (30) nach Anspruch 6, wobei der Gewindeabschnitt (365) der Verbindungsbasis (364) auf der Innenumfangsfläche der Verbindungsbasis (364) ausgebildet ist; und die Reibungsfläche (366) der Verbindungsbasis (364) auf einer Stirnfläche der Verbindungsbasis (364) ausgebildet ist, die sich entfernt von der Ringscheibe (363) befindet.

8. Reduzierstruktur (30) nach Anspruch 6, wobei die Verbindungsbasis (364) von der Ringscheibe (363) entlang einer Axialrichtung der Ringscheibe (363) nach vorne vorsteht; der Gewindeabschnitt (365) der Verbindungsbasis (364) auf der Außenumfangsfläche der Verbindungsbasis (364) ausgebildet ist, und die Reibungsfläche (366) der Verbindungsbasis (364) auf einer Stirnfläche der Verbindungsbasis (364) ausgebildet ist, die sich entfernt von der Ringscheibe (363) befindet.

9. Reduzierstruktur (30) nach einem der Ansprüche 6 bis 8, wobei eine Innenseite der Verbindungsbasis (364) ein Durchgangsloch (367) aufweist; eine Differenz zwischen einem Innendurchmesser der Verbindungsbasis (364) und einem Außendurchmesser der Verbindungsbasis (364) im Bereich von 2 mm bis 26 mm liegt.

## Revendications

1. Module de moteur d'assistance électrique pour une bicyclette (100),comprenant :
une carcasse (10) ;
un moteur (20) fixé dans la carcasse (10) et présentant un rotor (24) ;
une structure de réduction (30) comprenant un générateur d'ondes (32), une cannelure circulaire (34) et une cannelure souple (36), dans lequel le générateur d'ondes (32) présente une extrémité d'entrée (323) ; le rotor (24) transmet un couple à l'extrémité d'entrée (323) ; la cannelure circulaire (34) est fixée dans la carcasse (10) ; la cannelure souple (36) présente une paroi souple (361), dans lequel une surface périphérique externe de la paroi souple (361) présente une partie dentée (362) ; la partie dentée (362) s'engrène avec la cannelure circulaire (34) ; le générateur d'ondes (32) vient en butée contre un côté interne de la paroi souple (361) ; un bord d'extrémité avant de la paroi souple (361) est relié à un disque annulaire (363) qui s'étend vers l'intérieur ; un bord périphérique interne du disque annulaire (363) forme une base de liaison (364), dans lequel la base de liaison (364) présente une section filetée (365) et une surface de frottement (366) ; la section filetée (365) de la base de liaison (364) est située sur une surface périphérique interne ou une surface périphérique externe de la base de liaison (364) et est reliée à la surface de frottement (366) de la base de liaison (364) ;
une partie d'accouplement (40) qui est annulaire et est coaxiale avec la cannelure souple (36) et présente une partie de fixation (42), dans lequel la partie de fixation (42) présente une section filetée (423) et une surface de frottement (424) ; la surface de frottement (424) de la partie de fixation (42) est reliée à la section filetée (423) de la partie de fixation (42) ; la section filetée (423) de la partie de fixation (42) est mise en prise avec la section filetée (365) de la base de liaison (364), et la surface de frottement (424) de la partie de fixation (42) vient en butée contre la surface de frottement (366) de la base de liaison (364) ;
un axe de pédalier (50) pénétrant à travers la carcasse (10), la partie d'accouplement (40), la structure de réduction (30) et le rotor (24) d'une manière coaxiale et rotative, dans lequel deux extrémités de l'axe de pédalier (50) sortent respectivement de la carcasse (10) et présentent respectivement une partie de liaison (52) ; et
un pédalier (60) s'adaptant autour d'une périphérie de l'axe de pédalier (50) d'une manière coaxiale et rotative, dans lequel une première structure à cliquet unidirectionnelle (A) est disposée entre le pédalier (60) et la partie d'accouplement (40), et une deuxième structure à cliquet unidirectionnelle (B) est disposée entre le pédalier (60) et l'axe de pédalier (50) ; le pédalier (60) présente un cylindre de mise en prise (64), dans lequel le cylindre de mise en prise (64) pénètre à travers la carcasse (10) pour être mis en prise avec un plateau d'une bicyclette.

2. Module de moteur d'assistance électrique (100) selon la revendication 1, dans lequel la section filetée (365) de la base de liaison (364) est formée sur la surface périphérique interne de la base de liaison (364), et la surface de frottement (366) de la base de liaison (364) est formée sur une surface d'extrémité avant de la base de liaison (364) faisant face à la partie d'accouplement (40) ; la partie d'accouplement (40) présente une partie d'entraînement (44) reliée à la partie de fixation (42) ; le pédalier (60) présente un corps d'entraînement (62) relié au cylindre de mise en prise (64), dans lequel le corps d'entraînement (62) est divisé en une première partie (621) et une deuxième partie (622) le long d'une direction axiale du corps d'entraînement (62) ; la première structure à cliquet unidirectionnelle (A) est disposée entre la partie d'entraînement (44) de la partie d'accouplement (40) et la première partie (621) du pédalier (60), et la deuxième structure à cliquet unidirectionnelle (B) est disposée entre l'axe de pédalier (50) et la deuxième partie (622) du pédalier (60).

3. Module de moteur d'assistance électrique (100) selon la revendication 1, dans lequel la base de liaison (364) fait saillie vers l'avant à partir du disque annulaire (363) le long d'une direction axiale du disque annulaire (363) ; la section filetée (365) de la base de liaison (364) est formée sur la surface périphérique externe de la base de liaison (364), et la surface de frottement (366) de la base de liaison (364) est formée sur une surface d'extrémité avant de la base de liaison (364) faisant face à la partie d'accouplement (40) ; la partie d'accouplement (40) présente une partie d'entraînement (44) reliée à la partie de fixation (42) ; le pédalier (60) présente un corps d'entraînement (62) relié au cylindre de mise en prise (64), dans lequel le corps d'entraînement (62) est divisé en une première partie (621) et une deuxième partie (622) le long d'une direction axiale du corps d'entraînement (62) ; la première structure à cliquet unidirectionnelle (A) est disposée entre la partie d'entraînement (44) de la partie d'accouplement (40) et la première partie (621) du pédalier (60), et la deuxième structure à cliquet unidirectionnelle (B) est disposée entre l'axe de pédalier (50) et la deuxième partie (622) du pédalier (60).

4. Module de moteur d'assistance électrique (100) selon la revendication 1 à la revendication 3, dans lequel un rapport d'un diamètre interne de la base de liaison (364) à un diamètre externe de la base de liaison (364) est supérieur à 0,5.

5. Module de moteur d'assistance électrique (100) selon la revendication 1 à la revendication 3, dans lequel un côté interne de la base de liaison (364) présente un trou traversant (367) ; une différence entre un diamètre interne de la base de liaison (364) et un diamètre externe de la base de liaison (364) est dans la plage de 2 mm à 26 mm.

6. Structure de réduction pour une bicyclette (30), comprenant :
une cannelure souple (36) présentant une paroi souple (361), dans laquelle une surface périphérique externe de la paroi souple (361) présente une partie dentée (362) ; un bord d'extrémité avant de la paroi souple (361) est relié à un disque annulaire (363) qui s'étend vers l'intérieur ; un bord périphérique interne du disque annulaire (363) forme une base de liaison (364), dans lequel la base de liaison (364) présente une section filetée (365) et une surface de frottement (366) ; la section filetée (365) de la base de liaison (364) est située sur une surface périphérique interne ou une surface périphérique externe de la base de liaison (364) et est reliée à la surface de frottement (366) de la base de liaison (364) ; un angle est formé entre la surface de frottement (366) de la base de liaison (364) et la section filetée (365) de la base de liaison (364), ce qui permet à la surface de frottement (366) de la base de liaison (364) d'être adaptée pour être mise en butée afin de générer un frottement à des fins de transmission ;
une cannelure circulaire (34) s'engrenant avec la partie dentée (362) de la cannelure souple (36) ; et
un générateur d'ondes (32) correspondant à la cannelure circulaire (34) pour venir en butée contre une surface interne de la paroi souple (361), et ayant une extrémité d'entrée (323).

7. Structure de réduction (30) selon la revendication 6, dans laquelle la section filetée (365) de la base de liaison (364) est formée sur la surface périphérique interne de la base de liaison (364) ; la surface de frottement (366) de la base de liaison (364) est formée sur une surface d'extrémité avant de la base de liaison (364) éloignée du disque annulaire (363).

8. Structure de réduction (30) selon la revendication 6, dans laquelle la base de liaison (364) fait saillie vers l'avant à partir du disque annulaire (363) le long d'une direction axiale du disque annulaire (363) ; la section filetée (365) de la base de liaison (364) est formée sur la surface périphérique externe de la base de liaison (364), et la surface de frottement (366) de la base de liaison (364) est formée sur une surface d'extrémité avant de la base de liaison (364) éloignée du disque annulaire (363).

9. Structure de réduction (30) selon la revendication 6 à la revendication 8, dans laquelle un côté interne de la base de liaison (364) présente un trou traversant (367) ; une différence entre un diamètre interne de la base de liaison (364) et un diamètre externe de la base de liaison (364) est dans la plage de 2 mm à 26 mm.
